# EUROPEAN PATENT APPLICATION

(11) **EP 3 184 588 A1**
(43) Date of publication of application: **28.06.2017**
(21) Application number: 16205938.0
(22) Date of filing: 21.12.2016
(51) Int. Cl.: C08L 63/00, C09D 163/00, C08G 59/22, C08G 59/32, C08G 59/42, C08G 59/50, C08G 59/62

(54) **LIQUID EPOXY RESIN COMPOSITION**

(30) Priority: 22.12.2015 JP 2015249479
(71) Applicant: Shin-Etsu Chemical Co., Ltd., Chiyoda-ku, Tokyo 100-0004 (JP)
(72) Inventor: KUSHIHARA, Naoyuki, Annaka-shi, Gunma 379-0224 (JP); SUMITA, Kazuaki, Annaka-shi,, Gunma 379-0224 (JP); YAJIMA, Akira, Annaka-shi,, Gunma 379-0224 (JP)
(74) Representative: Zacco GmbH

(57) **Abstract**

Provided is a liquid epoxy resin composition superior in rubber particle dispersibility, and exhibiting a lower elastic modulus without impairing a high heat resistance and mechanical strength that are inherent to epoxy resins. The liquid epoxy resin composition contains:
(A) a liquid epoxy resin;
(B) a rubber particle-dispersed epoxy resin composition containing
(B-1) 50 to 90% by mass of a liquid epoxy resin;
(B-2) 10 to 50% by mass of rubber particles, the rubber particles having an average particle diameter of 10 to 10,000 nm;

(C) a curing agent;
(D) an inorganic filler; and
(E) a curing accelerator.

## Description

### [Technical field]

The present invention relates to a liquid epoxy resin composition superior in rubber particle dispersibility, and capable of exhibiting a lower elasticity and a higher strength without lowering a glass-transition temperature.

### [Background art]

In recent years, electronic devices such as mobile phones, smartphones, ultrathin liquid crystal or plasma TVs and light laptop computers have been downsized in an accelerated manner. That is, electronic parts used in these devices have been subjected to, for example, high-density integration and high-density packaging in an accelerated manner as well. Further, it is required that a resin material used in these electronic parts have a lower expansibility and a lower elastic modulus in terms of thermal stress.

Epoxy resins which are widely used in electronic parts have features such as a high heat resistance and a high adhesion to a base material. However, these epoxy resins also have a fault of, for example, being hard and brittle.

Here, studies have been made on lowering the elastic modulus of a resin and the stress thereof accordingly, by adding to an epoxy resin composition a rubber component(s) such as acrylic rubber, silicone rubber and butadiene rubber (Patent documents 1 and 2). However, in the case of directly adding a powdered rubber component(s) to an epoxy resin, there has, for example, been a problem that a desired property or properties cannot be achieved sufficiently as the rubber particles will clump together in such case.

Further, studies have also been made on lowering stress and improving the adhesion to a base material, by adding an epoxy-modified rubber which is obtained by reacting beforehand an epoxy resin and a rubber component having functional groups reactive with the epoxy resin (Patent document 3). However, in terms of modifying an epoxy resin, there have been, for example, a problem that a cured product will exhibit a lowered glass-transition temperature; and a problem that the mechanical strength of the cured product will decrease under a high temperature.

In this way, there has been anticipated a type of epoxy resin allowing rubber particles to be highly dispersed therein such that the stress of the resin can be lowered without impairing the properties that are inherent to an epoxy resin.

### [Prior art document]

### [Patent document]

Patent document 1: JP-A-2014-095063
Patent document 2: JP-A-2014-028932
Patent document 3: Japanese Patent No. 4,775,374

### [Summary of the invention]

### [Problem to be solved by the invention]

It is an object of the present invention to provide a liquid epoxy resin composition superior in rubber particle dispersibility, and capable of exhibiting a lower elasticity and a high strength without lowering a glass-transition temperature.

### [Means to solve the problem]

The inventors of the present invention conducted a series of studies in order to solve the above problems, and completed the invention as follows. That is, the inventors found that the following composition was a resin composition for semiconductor encapsulation that could achieve the aforementioned objectives.

Particularly, the invention is to provide the following resin composition.
[1]
   A liquid epoxy resin composition containing:
   (A) a liquid epoxy resin;
   (B) a rubber particle-dispersed epoxy resin mixture in an amount of 20 to 200 parts by mass with respect to 100 parts by mass of the component (A), and containing
      (B-1) 50 to 90% by mass of a liquid epoxy resin in the component (B) and
      (B-2) 10 to 50% by mass of rubber particles in the component (B), the rubber particles having an average particle diameter of 10 to 10,000 nm;
   (C) a curing agent in an amount at which groups in the component (C) that are reactive with epoxy groups are in an amount of 0.7 to 1.3 equivalents with respect to 1 equivalent of epoxy groups in the components (A) and (B-1);
   (D) an inorganic filler in an amount of 20 to 1,500 parts by mass with respect to a total of 100 parts by mass of the components (A) to (C); and
   (E) a curing accelerator in an amount of 0.05 to 10 parts by mass with respect to the total of 100 parts by mass of the components (A) to (C).
[2] A liquid epoxy resin composition containing:
   (B) a rubber particle-dispersed epoxy resin mixture containing
      (B-1) 50 to 90% by mass of a liquid epoxy resin in the component (B) and
      (B-2) 10 to 50% by mass of rubber particles in the component (B), the rubber particles having an average particle diameter of 10 to 10,000 nm;
   (C) a curing agent in an amount at which groups in the component (C) that are reactive with epoxy groups are in an amount of 0.7 to 1.3 equivalents with respect to 1 equivalent of epoxy groups in the component (B-1);
   (D) an inorganic filler in an amount of 20 to 1,500 parts by mass with respect to a total of 100 parts by mass of the components (B) and (C); and
   (E) a curing accelerator in an amount of 0.1 to 10 parts by mass with respect to the total of 100 parts by mass of the components (B) and (C).
[3] The liquid epoxy resin composition according to [1] or [2], wherein the component (B-2) is at least one kind of rubber particles selected from acrylic rubber particles, silicone rubber particles, urethane rubber particles, styrene-butadiene rubber particles and butadiene rubber particles.

### [Effects of the invention]

The liquid epoxy resin composition of the invention is superior in rubber particle dispersibility, and is able to exhibit a lower elastic modulus without impairing a high heat resistance and mechanical strength that are inherent to epoxy resins.

### [Brief description of the drawings]

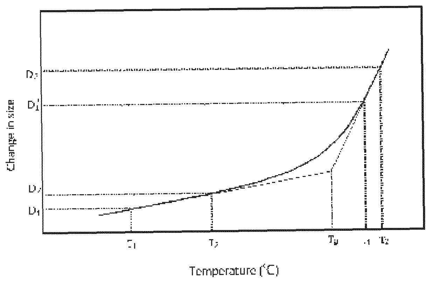

FIG. 1 is a diagram showing a method for determining a glass-transition temperature in working examples.

### [Mode for carrying out the invention]

The liquid epoxy resin composition is described in detail hereunder. However, the present invention is not limited to the following examples.

The present invention contains the following components (A) to (E); or (B) to (E).

A liquid epoxy resin (A) is an epoxy resin that is liquid at room temperature (25°C). Examples of such liquid epoxy resin include a liquid bisphenol A-type epoxy resin, a liquid bisphenol F-type epoxy resin, a liquid naphthalene type epoxy resin, a liquid aminophenol type epoxy resin, a liquid hydrogenated bisphenol type epoxy resin, a liquid alcohol ether type epoxy resin, a liquid cyclic aliphatic epoxy resin, a liquid fluorene type epoxy resin and a liquid alicyclic epoxy resin. Any of these liquid epoxy resins may be used singularly, or two or more of them may be used in combination with one another.

A rubber particle-dispersed epoxy resin mixture (B) is a mixture obtained by dispersing rubber particles (B-2) in the following liquid epoxy resin (B-1). A mass ratio between (B-1) and (B-2) is (B-1) : (B-2) = 50 to 90 : 10 to 50% by mass, preferably 60 to 80 : 20 to 40% by mass. Further, when the component (A) of the invention is not contained, the mass ratio between (B-1) and (B-2) may be (B-1) : (B-2) = 50 to 95 : 5 to 50% by mass.

As such rubber particle-dispersed epoxy resin mixture (B), there may be used a commercially available mixture directly; or each of (B-1) and (B-2) may be prepared beforehand, followed by mixing the two before use. The mixture is obtained by stirring, mixing and dispersing the components (B-1) and (B-2) while performing a heating treatment if necessary. There are no particular restrictions on an apparatus for performing, for example, such stirring, mixing and dispersing. Examples of such apparatus include a kneader, a triple roll mill, a ball mill, a planetary mixer and a bead mill, each being equipped with a stirring and heating device(s). Further, these apparatuses may be appropriately used in combination with one another. The component (B) is added in an amount of 20 to 200 parts by mass, preferably 50 to 150 parts by mass, with respect to 100 parts by mass of the component (A). Here, if not employing the component (A), it is preferred that the component (B-1) be added in a relatively large amount. It is preferred that the liquid epoxy resin (A) and the liquid epoxy resin (B-1) be in an amount of 4 to 60% by mass, particularly preferably 5 to 50% by mass, in the liquid epoxy resin composition of the invention.

As is the case for the component (A), examples of the liquid epoxy resin (B-1) include a liquid bisphenol A-type epoxy resin, a liquid bisphenol F-type epoxy resin, a liquid naphthalene type epoxy resin, a liquid aminophenol type epoxy resin, a liquid hydrogenated bisphenol type epoxy resin, a liquid alcohol ether type epoxy resin, a liquid cyclic aliphatic epoxy resin, a liquid fluorene type epoxy resin, a liquid glycidyl amine type epoxy resin and a liquid alicyclic epoxy resin. Any of these liquid epoxy resins may be used singularly, or two or more of them may be used in combination with one another. Among these liquid epoxy resins, particularly preferred are a liquid bisphenol A-type epoxy resin, a liquid bisphenol F-type epoxy resin, a liquid aminophenol type epoxy resin and a liquid glycidyl amine type epoxy resin. Moreover, the liquid epoxy resin(s) used as (B-1) may be identical to or different from that or those used as (A).

Examples of the rubber particles (B-2) having an average particle diameter of 10 to 10,000 nm, include particles of styrene-butadiene rubber (SBR), particles of nitrile-butadiene rubber (NBR), particles of butadiene rubber (BR), particles of urethane rubber (UR) and particles of acrylic rubber (AR). Among these rubber particles, particles made of acrylic rubber is preferred in terms of heat resistance and moisture resistance. Further, as rubber particles other those described above, there may also be preferably employed silicone rubber particles. Examples of such silicone rubber particles include particles obtained by bridging polyorganosiloxanes such as linear polydimethylsiloxane, linear polymethylphenylsiloxane and linear polydiphenylsiloxane; particles obtained by coating the surfaces of silicone rubber particles with a silicone resin; particles obtained by modifying the surfaces of silicone rubber particles with epoxy groups; and core-shell polymer particles that are obtained through, for example, emulsion polymerization, and are composed of solid silicone particles as cores and an organic polymer such as an acrylic resin as shells. These silicone rubber particles may be used regardless of whether they are amorphous or spherical. However, spherical silicone rubber particles are preferred for the purpose of keeping the viscosity of the liquid epoxy resin composition low, such viscosity being associated with a formability of the liquid epoxy resin composition.

In the present invention, the rubber particles have an average particle diameter of 10 to 10,000 nm, preferably 100 to 5,000 nm, in terms of, for example, improving a thermal shock resistance and reducing a stress to a semiconductor element(s). In the present invention, the average particle diameter of the rubber particles is a value of median diameter (d50) measured by a nano-track particle size distribution measuring device (by NIKKISO CO., LTD., dynamic light scattering method).

Examples of a curing agent as a component (C) include an amine-based curing agent, a phenol-based curing agent and an acid anhydride-based curing agent.

Examples of such amine-based curing agent include an aromatic diaminodiphenylmethane compound such as 3,3'-diethyl-4,4'-diaminodiphenylmethane, 3,3',5,5'-tetramethyl-4,4'-diaminodiphenylmethane and 3,3',5,5'-tetraethyl-4,4'-diaminodiphenylmethane; 2,4-diaminotoluene; 1,4-diaminobenzene; and 1,3-diaminobenzene. Any of these amine-based curing agents may be used singularly, or two or more of them may be used in combination with one another.

It is preferred that the equivalent of all the amino groups in the amine-based curing agent(s) to 1 equivalent of the epoxy groups in the components (A) and (B-1) be 0.7 to 1.2, more preferably 0.7 to 1.1, and even more preferably 0.85 to 1.05. When such equivalent is smaller than 0.7, unreacted epoxy groups may remain, a glass-transition temperature may decrease, or an adhesion may be impaired. Further, when such equivalent is greater than 1.2, a cured product of the composition will become hard and brittle such that cracks may occur at the time of performing reflow or a temperature cycle test.

Examples of the above phenol-based curing agent include a phenol novolac resin; a naphthalene ring-containing phenolic resin; an aralkyl type phenolic resin; a triphenolalkane type phenolic resin; a biphenyl backbone-containing aralkyl type phenolic resin; a biphenyl type phenolic resin; an alicyclic phenolic resin; a heterocyclic phenolic resin; a naphthalene ring-containing phenolic resin; a resorcinol type phenolic resin; an allyl group-containing phenolic resin; and a bisphenol type phenolic resin such as a bisphenol A-type resin and a bisphenol F-type resin. Any of these phenol-based curing agents may be used singularly, or two or more of them may be used in combination with one another.

When a phenolic resin is used as the curing agent, it is preferred that the equivalent of the phenolic hydroxyl groups contained in the curing agent to the total of 1 equivalent of the epoxy groups in the components (A) and (B-1) be 0.7 to 1.3, more preferably 0.8 to 1.2.

Examples of the above acid anhydride-based curing agent include 3,4-dimethyl-6-(2-methyl-1-propenyl)-1,2,3,6-tetrahydrophthalic anhydride, 1-isopropyl-4-methyl-bicyclo [2.2.2] oct-5-ene-2,3-dicarboxylic anhydride, methyl tetrahydrophthalic anhydride, methyl hexahydrophthalic anhydride, hexahydrophthalic anhydride, methylhimic anhydride, pyromellitic dianhydride, maleated alloocimene, benzophenonetetracarboxylic dianhydride, 3,3',4,4'-biphenyl-tetra-bis-benzophenonetetracarboxylic anhydride, (3,4-dicarboxyphenyl) ether dianhydride, bis (3,4-dicarboxyphenyl) methane dianhydride and 2,2-bis (3,4-dicarboxyphenyl) propane dianhydride. Any of these acid anhydride-based curing agents may be used singularly, or two or more of them may be used in combination with one another.

When such acid anhydride-based curing agent is used, it is preferred that the equivalent of the acid anhydride groups (-CO-O-CO-) in the curing agent to the total of 1 equivalent of the epoxy groups in the components (A) and (B-1) be 0.7 to 1.3. When such equivalent is smaller than 0.7, unreacted epoxy groups will remain in a way such that the glass-transition temperature may decrease, and that the adhesion may be impaired as well. When such equivalent is greater than 1.3, the cured product of the composition will become hard and brittle in a way such that cracks may occur at the time of performing reflow or a temperature cycle test.

An inorganic filler (D) is added to reduce a thermal expansion rate of the liquid epoxy resin composition and improve a moisture resistance reliability thereof. Examples of such inorganic filler include silicas such as a molten silica, a crystalline silica and cristobalite; alumina; silicon nitride; aluminum nitride; boron nitride; titanium oxide; glass fibers; and magnesium oxide. Here, preferred are a spherical alumina, a spherical molten silica, glass fibers and the like. The average particle diameters and shapes of these inorganic fillers can be selected based on the intended use. The inorganic filler is added in an amount of 20 to 1,500 parts by mass, preferably 50 to 1,000 parts by mass, with respect to a total of 100 parts by mass of the components (A) to (C).

There are no particular restrictions on a curing accelerator (E), as long as it is capable of accelerating a curing reaction. Examples of such curing accelerator include phosphorous compounds such as triphenylphosphine, tributylphosphine, tri (p-methylphenyl) phosphine, tri (nonylphenyl) phosphine, triphenylphosphine·triphenylborane and tetraphenylphosphine·tetraphenylborate; tertiary amine compounds such as triethylamine, benzyldimethylamine, α-methylbenzyldimethylamine and 1,8-diazabicyclo [5.4.0] undecene-7; and imidazole compounds such as 2-methylimidazole, 2-ethyl-4-methylimidazole, 2-phenylimidazole and 2-phenyl-4-methylimidazole. Among these examples, preferred are triphenylphosphine, triphenylphosphine·triphenylborane and 2-ethyl-4-methylimidazole. The curing accelerator is added in an amount of 0.05 to 10 parts by mass, preferably 0.1 to 10 parts by mass, more preferably 0.5 to 5 parts by mass, with respect to the total of 100 parts by mass of the components (A) to (C).

### (F) Other additives

The heat-curable resin composition of the invention can be obtained by combining given amounts of the components (A), (B), (C), (D) and (E). However, other additives as a component (F) may also be added to the composition of the invention if necessary, without impairing the purposes and effects of the present invention. Examples of such additives include a polymerization initiator, a mold release agent, a flame retardant, an ion trapping agent, an antioxidant, an adhesiveness imparting agent, a low stress agent, a coloring agent and a coupling agent.

A mold release agent is added to improve a mold releasability from a mold. All known mold release agents may be used, and examples of such known mold release agents include a carnauba wax; a rice wax; a candelilla wax; polyethylene; oxidized polyethylene; polypropylene; montanic acid; stearic acid; stearic acid ester; stearic acid amide; and a montan wax as an ester compound obtained by combining montanic acid with, for example, a saturated alcohol, 2-(2-hydroxyethylamino) ethanol, ethylene glycol or glycerin.

The flame retardant is added to impart a flame retardance. All known flame retardants may be used, and there are no particular restrictions on such flame retardants. Examples of such flame retardants include a phosphazene compound, a silicone compound, a zinc molybdate-supported talc, a zinc molybdate-supported zinc oxide, an aluminum hydroxide, a magnesium hydroxide and a molybdenum oxide.

The ion trapping agent is added to trap the ion impurities contained in the liquid resin composition, and avoid a thermal degradation and a moisture absorption degradation. All known trapping agents may be used, and there are no particular restrictions on such ion trapping agents. Examples of such ion trapping agents include hydrotalcites, a bismuth hydroxide compound and rare-earth oxides.

Although the amount of the component (F) added varies depending on the intended use of the liquid epoxy resin composition, it is preferred that each additive be added in an amount of not larger than 10% by mass with respect to the whole liquid epoxy resin composition.

### [Production method of liquid epoxy resin composition]

The liquid epoxy resin composition of the invention can, for example, be produced by the following method.

For example, a mixture of the components (A), (B), (C), (D) and (E) can be obtained by simultaneously or separately mixing, stirring, melting and/or dispersing the liquid epoxy resin (A), the rubber particle-dispersed liquid epoxy resin (B), the curing agent (C), the inorganic filler (D) and the curing accelerator (E) while performing a heating treatment if necessary. At least one of the mold release agent, flame retardant and ion trapping agent as other additives (F) may also be added to and mixed with the mixture of the components (A), (B), (C), (D) and (E). As each of the components (A) to (F), there may be employed only one ingredient, or two or more ingredients.

When producing the composition of the invention, the composition can be obtained by performing stirring, melting, mixing and dispersing while performing a heating treatment if necessary. There are no particular restrictions on an apparatus for performing, for example, such stirring, mixing and dispersing. Examples of such apparatus include a kneader, a triple roll mill, a ball mill, a planetary mixer and a bead mill, each being equipped with a stirring and heating device(s). Further, these apparatuses may be appropriately used in combination with one another.

### [Working example]

The present invention is described in greater detail hereunder with reference to working and comparative examples. However, the invention is not limited to the following working examples.

In working examples 1 to 14 and comparative examples 1 to 8, a liquid epoxy resin composition was prepared by combining the following components of the amounts shown in Table 1 and Table 2. The liquid epoxy resin composition was then molded after being heated at 100°C for 2 hours, and then at 150°C for 4 hours, thus obtaining a cured product of the composition in each example. Here, in Table 1 and Table 2, the amounts of the components (A) to (E) are expressed as parts by mass.
(A) Liquid epoxy resin
   (A1) Bisphenol A-type epoxy resin (EPIKOTE 828 by Mitsubishi Chemical Corporation)
   (A2) Bisphenol F-type epoxy resin (TDF-8170 by Mitsubishi Chemical Corporation)
   (A3) Aminophenol-type trifunctional epoxy resin (jER630 by Mitsubishi Chemical Corporation)
(B) Rubber particle-dispersed epoxy resin mixture
   (B1) Mixture of bisphenol A-type epoxy resin and acrylic rubber particles (BPA 328 by NIPPON SHOKUBAI CO., LTD.; average particle diameter of rubber particles 300 to 600 nm; amount of particles contained 20% by mass)
   (B2) Mixture of bisphenol F-type epoxy resin and acrylic rubber particles (BPF 307 by NIPPON SHOKUBAI CO., LTD.; average particle diameter of rubber particles 300 to 600 nm; amount of particles contained 20% by mass)
   (B3) Mixture of bisphenol A-type epoxy resin and polybutadiene rubber particles (MX-154 by Kaneka Corporation; average particle diameter of rubber particles 100 to 500 nm; amount of particles contained 40% by mass)
   (B4) Mixture of bisphenol A-type epoxy resin and silicone rubber particles (MX-960 by Kaneka Corporation; average particle diameter of rubber particles 100 to 500 nm; amount of particles contained 25% by mass)
   (B5) Mixture of glycidylamine type epoxy resin and styrene butadiene rubber particles (MX-451 by Kaneka Corporation; average particle diameter of rubber particles 100 to 500 nm; amount of particles contained 25% by mass)
   (B6) Mixture of bisphenol A-type epoxy resin and acrylic rubber particles, mixed in advance by a method described in the following preparation example (amount of particles contained 16.7% by mass)

### Preparation example

The bisphenol A-type epoxy resin (EPIKOTE 828 by Mitsubishi Chemical Corporation) of 100 g and acrylic rubber particles (F351 by Aica Kogyo Co., Ltd.; average particle diameter of rubber particles 200 to 400 nm) of 20 g, were put into a polyethylene container of 150 ml, followed by mixing them at 25°C and 1,800 rpm for 2 min using a planetary centrifugal mixer (THINKY MIXER by THINKY CORPORATION). Later, the ingredients were further mixed 6 times using a triple roll mill (by INOUE MFG., INC.)
(B-2) Rubber particles
   (B-2-1) Acrylic rubber particles (F351 by Aica Kogyo Co., Ltd.; average particle diameter of rubber particles 200 to 400 nm)
   (B-2-2) Silicone rubber particles (KMP-600 by Shin-Etsu Chemical Co., Ltd.; average particle diameter of rubber particles 5,000 to 6,000 nm)

### Other rubber component

(B7) Liquid butadiene rubber (CTBN1300X9 by UBE INDUSTRIES, LTD.)
(C) Curing agent
   (C1) Allylphenol type phenolic resin (MEH-8000H by MEIWA PLASTIC INDUSTRIES, LTD.)
   (C2) Acid anhydride curing agent (RIKACID MH by New Japan Chemical Co., Ltd.)
   (C3) 3,3'-diethyl-4,4'-diaminodiphenylmethane (KAYAHARD AA by Nippon Kayaku Co., Ltd.)
(D) Inorganic filler
   (D1) Spherical silica with an average particle diameter of 13 µm (CS-6103 53C by TATSUMORI LTD.)
(E) Curing accelerator
   (E1) Curing accelerator: 2-ethyl-4-methylimidazole (by SHIKOKU CHEMICALS CORPORATION)

The following properties of each composition and cured product thereof were measured. The results are shown in Table 1 (working examples) and Table 2 (comparative examples).

### Evaluation item

### (1) Viscosity

A viscosity value was measured 2 min after a specimen had been positioned, in accordance with a method described in JIS Z8803:2011 where a measurement temperature was 25°C and a measuring device used was an E-type viscometer.

### (2) Bending elastic modulus, bending strength, deflection amount

In accordance with JIS K6911:2006, the cured product obtained under the above curing conditions was subjected to the measurements.

### (3) Adhesion

The liquid epoxy resin composition of the invention was applied to a 10 × 10 mm silicon wafer, followed by mounting a silicon chip thereon and then curing the resin composition under the above curing conditions, thus obtaining an adhesion test specimen. A shear adhesion force of the specimen at room temperature (25°C) was measured using a bond tester DAGE-SERIES-4000PXY (by Nordson Advanced Technology Japan K.K.). An adhesion area between the frame of the specimen and the resin was 10 mm².

### (4) Glass-transition temperature

Each cured product obtained in the working and comparative examples was processed into a 5 × 5 × 15 mm specimen, followed by placing the same in a thermal dilatometer TMA 8140C (by Rigaku Corporation). After setting a temperature program to a rise rate of 5°C / min and arranging that a constant load of 19.6 mN be applied to the specimen, a change in size of the specimen was measured during a period from 25°C to 300°C. The correlation between such change in size and temperatures was then plotted on a graph. The glass-transition temperatures in the working and comparative examples were later obtained based on such graph showing the correlation between the change in size and temperatures, and through the following method for determining the glass-transition temperature(s). The results are shown in Table 1 and Table 2.

### (Determination method of glass-transition temperature)

In FIG.1, T₁ and T₂ represent two arbitrary temperatures that are not higher than the temperature at the inflection point and by which a tangent line to the size change-temperature curve can be drawn; whereas T₁' and T₂' represent two arbitrary temperatures that are not lower than the temperature at the inflection point and by which a similar tangent line can be drawn. D₁ and D₂ individually represent a change in size at T₁ and a change in size at T₂; whereas D₁' and D₂' individually represent a change in size at T₁' and a change in size at T₂'. The glass-transition temperature (Tg) is then defined as the temperature at the point of intersection between a straight line connecting points (T₁, D₁) and (T₂, D₂) and a straight line connecting points (T₁', D₁') and (T₂', D₂').

### (5) Dispersibility

Each of the cured products obtained in the working and comparative examples was processed into a specimen of a size of 5×5×15 mm. A fracture surface of such specimen was then observed by an electronic microscope so as to study the dispersibility of the rubber particles. The dispersibility of the rubber particles was visually evaluated. Here, examples exhibiting favorable rubber particle dispersibilities were marked "○," whereas examples exhibiting poor rubber particle dispersibilities were marked "×." The results thereof are shown in Table 1 and Table 2.

**[Table 1]**

| | Working example 1 | Working example 2 | Working example 3 | Working example 4 | Working example 5 | Working example 6 | Working example 7 | Working example 8 | Working example 9 | Working example 10 | Working example 11 | Working example 12 | Working example 13 | Working example 14 |
|---|---|---|---|---|---|---|---|---|---|---|---|---|---|---|
| Liquid epoxy resin(A1) | 100 | 100 | 100 | 100 | 100 | | | 100 | 100 | 100 | 100 | 100 | 100 | |
| Liquid epoxy resin(A2) | | | | | | 100 | | | | | | | | |
| Liquid epoxy resin(A3) | | | | | | | 100 | | | | | | | |
| Rubber particle-dispersed epoxy resin mixture(B1) | 100 | 100 | 100 | | | | | 100 | 100 | 200 | 20 | | | 100 |
| Rubber particle-dispersed epoxy resin mixture(B2) | | | | | | 100 | | | | | | | | |
| Rubber particle-dispersed epoxy resin mixture(B3) | | | | 100 | | | | | | | | | | |
| Rubber particle-dispersed epoxy resin mixture(B4) | | | | | 100 | | | | | | | | | |
| Rubber particle-dispersed epoxy resin mixture(B5) | | | | | | | 100 | | | | | | | |
| Rubber particle-dispersed epoxy resin mixture(B6) | | | | | | | | | | | | 100 | 100 | |
| Acrylic rubber particles (B-2-1) | | | | | | | | | | | | | | |
| Silicone rubber particles (B-2-2) | | | | | | | | | | | | | | |
| Liquid butadiene rubber(B7) | | | | | | | | | | | | | | |
| Curing agent(C1) | 136 | | | 121 | 133 | 155 | 255 | | | 197 | 84 | 136 | | |
| Curing agent(C2) | | 162 | | | | | | 162 | 162 | | | | 162 | 74 |
| Curing agent(C3) | | | 61 | | | | | | | | | | | |
| Equivalent ratio (reactive group in curing agent/epoxy group) | 1.0 | 1.0 | 1.0 | 1.0 | 1.0 | 1.0 | 1.0 | 1.0 | 1.0 | 1.0 | 1.0 | 1.0 | 1.0 | 1.0 |
| Inorganic filler(D1) | 336 | 362 | 261 | 321 | 333 | 355 | 455 | 155 | 1448 | 497 | 204 | 336 | 362 | 174 |
| Curing accelerator(E1) | 1 | 1 | 0.2 | 1 | 1 | 1 | 1 | 1 | 1 | 1 | 1 | 1 | 1 | 1 |
| Viscosity[Pa.s] | 200 | 30 | 100 | 310 | 220 | 120 | 80 | 10 | 180 | 400 | 160 | 300 | 50 | 120 |
| Bending elastic modulus[MPa] | 5500 | 5000 | 5300 | 4700 | 5000 | 5500 | 5800 | 4000 | 14000 | 5000 | 5700 | 5500 | 5500 | 4600 |
| Bending strength[MPa] | 120 | 140 | 120 | 100 | 100 | 110 | 140 | 80 | 150 | 100 | 100 | 110 | 150 | 160 |
| Deflection amount[mm] | 17 | 13 | 14 | 17 | 16 | 16 | 14 | 18 | 3.5 | 19 | 17 | 15 | 12 | 15 |
| Glass-transition temperature[°C] | 70 | 130 | 110 | 70 | 70 | 60 | 80 | 130 | 130 | 70 | 70 | 70 | 130 | 130 |
| Adhesion force to Si[MPa] | 32 | 28 | 35 | 33 | 31 | 29 | 36 | 31 | 32 | 33 | 31 | 31 | 29 | 27 |
| Dispersibility | ○ | ○ | ○ | ○ | ○ | ○ | ○ | ○ | ○ | ○ | ○ | ○ | ○ | ○ |

**[Table 2]**

| | Comparative example 1 | Comparative example 2 | Comparative example 3 | Comparative example 4 | Comparative example 5 | Comparative example 6 | Comparative example 7 | Comparative example 8 |
|---|---|---|---|---|---|---|---|---|
| Liquid epoxy resin(A1) | 100 | 100 | 100 | 100 | 100 | 100 | 100 | 100 |
| Liquid epoxy resin(A2) | | | | | | | | |
| Liquid epoxy resin(A3) | | | | | | | | |
| Rubber particle-dispersed epoxy | | | | | | 100 | 100 | 100 |
| Rubber particle-dispersed epoxy | | | | | | | | |
| Rubber particle-dispersed epoxy | | | | | | | | |
| Rubber particle-dispersed epoxy | | | | | | | | |
| Rubber particle-dispersed epoxy | | | | | | | | |
| Rubber particle-dispersed epoxy | | | | | | | | |
| Acrylic rubber particles (B-2-1) | | 20 | | | | | | |
| Silicone rubber particles (B-2-2) | | | 20 | | | | | |
| Liquid butadiene rubber(B7) | | | | 20 | | | | |
| Curing agent(C1) | 75 | 75 | 75 | 75 | 75 | | | 136 |
| Curing agent(C2) | | | | | | 338 | 84 | |
| Curing agent(C3) | | | | | | | | |
| Equivalent ratio (reactive group in curing agent / epoxy group) | 1.0 | 1.0 | 1.0 | 1.0 | 1.0 | 0.5 | 1.5 | 1.0 |
| Inorganic filler(D1) | 175 | 175 | 175 | 175 | | 539 | 284 | 175 |
| Curing accelerator(E1) | 1 | 1 | 1 | 1 | 1 | 1 | 1 | |
| Viscosity[Pa.s] | 140 | 400 | 300 | 500 | 5 | 10 | 240 | 200 |
| Bending elastic modulus[MPa] | 6200 | 6000 | 6000 | 5500 | 3000 | Molding failure | 6100 | Uncured |
| Bending strength[MPa] | 100 | 85 | 80 | 80 | 70 | | 90 | |
| Deflection amount[mm] | 10 | 9 | 9 | 8 | 15 | | 10 | |
| Glass-transition temperature[°C] | 70 | 50 | 50 | 40 | 70 | | 130 | |
| Adhesion force to Si[MPa] | 24 | 20 | 22 | 21 | 14 | | 10 | |
| Dispersibility | - | × | × | ○* | - | - | ○ | - |

| | | | | | | | | |
|---|---|---|---|---|---|---|---|---|
| *Compatibilized | | | | | | | | |

According to the working and comparative examples, it is obvious that the liquid epoxy resin composition of the invention is superior in rubber particle dispersibility, and exhibits a lower elastic modulus without impairing a high heat resistance and mechanical strength that are inherent to epoxy resins.

## Claims

1. A liquid epoxy resin composition comprising:
(A) a liquid epoxy resin;
(B) a rubber particle-dispersed epoxy resin mixture in an amount of 20 to 200 parts by mass with respect to 100 parts by mass of the component (A), and containing
(B-1) 50 to 90% by mass of a liquid epoxy resin in the component (B) and
(B-2) 10 to 50% by mass of rubber particles in the component (B), the rubber particles having an average particle diameter of 10 to 10,000 nm;
(C) a curing agent in an amount at which groups in the component (C) that are reactive with epoxy groups are in an amount of 0.7 to 1.3 equivalents with respect to 1 equivalent of epoxy groups in the components (A) and (B-1);
(D) an inorganic filler in an amount of 20 to 1,500 parts by mass with respect to a total of 100 parts by mass of the components (A) to (C); and
(E) a curing accelerator in an amount of 0.05 to 10 parts by mass with respect to the total of 100 parts by mass of the components (A) to (C).

2. A liquid epoxy resin composition comprising:
(B) a rubber particle-dispersed epoxy resin mixture containing
(B-1) 50 to 90% by mass of a liquid epoxy resin in the component (B) and
(B-2) 10 to 50% by mass of rubber particles in the component (B), the rubber particles having an average particle diameter of 10 to 10,000 nm;
(C) a curing agent in an amount at which groups in the component (C) that are reactive with epoxy groups are in an amount of 0.7 to 1.3 equivalents with respect to 1 equivalent of epoxy groups in the component (B-1);
(D) an inorganic filler in an amount of 20 to 1,500 parts by mass with respect to a total of 100 parts by mass of the components (B) and (C); and
(E) a curing accelerator in an amount of 0.1 to 10 parts by mass with respect to the total of 100 parts by mass of the components (B) and (C).

3. The liquid epoxy resin composition according to claim 1 or claim 2, wherein the component (B-2) is at least one kind of rubber particles selected from acrylic rubber particles, silicone rubber particles, urethane rubber particles, styrene-butadiene rubber particles and butadiene rubber particles.
